# EUROPÄISCHE PATENTSCHRIFT

(11) **EP 2 941 944 B1**
(45) Veröffentlichungstag und Bekanntmachung des Hinweises auf die Patenterteilung: **02.11.2016**
(21) Anmeldenummer: 15001286.2
(22) Anmeldetag: 30.04.2015
(51) Int. Cl.: B07B 9/00, A01D 33/08, A01D 33/04

(54) **TRENNVORRICHTUNG FÜR EINE KARTOFFELERNTEMASCHINE**
SEPARATOR DEVICE FOR A POTATO HARVESTER
DISPOSITIF DE TRIAGE POUR UNE MACHINE DE RÉCOLTE DE POMMES DE TERRE

(30) Priorität: 10.05.2014 DE 102014006842
(43) Veröffentlichungstag der Anmeldung: 11.11.2015
(73) Patentinhaber: Grimme Landmaschinenfabrik GmbH & Co. KG, 49401 Damme (DE)
(72) Erfinder: Dettmer, Franz-Josef, 49577 Ankum (DE); Döhmann, Christian, 49594 Alfhausen (DE)
(74) Vertreter: Busse & Busse

(56) Entgegenhaltungen:
- EP-A1- 2 016 819
- EP-A2- 1 133 909
- DD-A1- 210 847
- DE-A1-102012 016 057

## Beschreibung

Die Erfindung betrifft eine Kartoffelerntemaschine, die mit einer das aufgenommene Erntegut von Kluten, Steinen, Kraut o. dgl. mitgeförderten Beimengungen lösenden Trennvorrichtung gemäß dem Oberbegriff des Anspruchs 1 versehen ist.

Für Maschinen und Anlagen zur Hackfruchtbe- und verarbeitung, insbesondere Kartoffelerntemaschinen, sind unterschiedliche Verfahrensvarianten bekannt. Insbesondere zum Trennen von Kartoffeln o. dgl. Erntegut aus einem aufgenommenen Bodengemisch mit Kluten, Steinen, ähnlichen Festkörpern sowie fasrigen Beimengungen werden unterschiedliche Konzepte von mechanischen Trennvorrichtungen mit Bändern und Sieben eingesetzt (Firmenprospekt, Grimme Landmaschinenfabrik GmbH & Co. KG, Damme; "Produktprogramm", GEN.00283, 08/13/5000; Erntetechnik, S. 14 bis 23).

Bei einer Lösung gemäß DE 10 2012 016 057 A1 wird zur Beeinflussung des mittels einer Kartoffelerntemaschine aufgenommenen Gemisches zusätzlich ein Luftstrom genutzt, der im Bereich eines Rückhalteelementes auf die von einem Förderer über eine Fallstufe verlagerten Trenngüter einwirkt. Dieser Luftstrom wird auf das im Bereich des Rückhalteelementes aufgelockert vorliegende Gemisch geleitet, so dass im Bereich eines fluidischen Trennbettes eine in entgegengesetzt verlaufende Förderrichtungen aktivierte Weiterleitung von Erntegut und Festkörpern unterstützt wird. Aus EP 1 133 909 A2 ist eine Hackfruchterntemaschine bekannt, die ein System mit mehreren Bandförderern aufweist. Diese können in variable Wirkpositionen verschwenkt werden. Eine fluidische Trennung ist in keinem der Förderbereiche vorgesehen. Eine Fördereinrichtung für Rüben gemäß DE 43 38 477 A1 weist als Steilförderer arbeitende Stabbänder auf, so dass in Kombination mit Flachförderern der Reinigungsvorgang verbessert ist. Eine fluidische Trennung ist bei diesem Aggregat nicht vorgesehen.

Die Erfindung befasst sich mit dem Problem, die mit einer fluidischen Trennvorrichtung versehene Kartoffelerntemaschine so zu gestalten, dass mit geringem technischem Aufwand der Betrieb der Maschine auf sich ändernde Erntebedingungen umrüstbar ist und damit bei verringertem Energieeinsatz eine optimale Gemischtrennung möglich wird.

Die Erfindung löst diese Aufgabe mit einer Kartoffelerntemaschine mit den Merkmalen des Anspruchs 1. Weitere vorteilhafte Ausgestaltungen ergeben sich aus den Ansprüchen 2 bis 25.

Zur Verbesserung der mit einer fluidischen Trennvorrichtung gemäß DE 10 2012 016 057 A1 zusammenarbeitenden Kartoffelerntemaschine ist insbesondere eine Reduzierung des im Gesamtsystem erforderlichen Energieeinsatzes mit zumindest gleichbleibender Trennqualität vorgesehen. Dazu soll insbesondere eine wahlweise Zu- bzw. Abschaltung von Trenn- und Säuberungskomponenten der Maschine genutzt werden. Ausgehend davon wird das erfindungsgemäße System mit der integrierten Trennvorrichtung nunmehr dadurch verbessert, dass in dieser Maschine die Möglichkeit geschaffen ist, dass der Förderstrom des Gemisches den Wirkbereich der Trennvorrichtung umgehen kann. In dieser Umleit-Phase ist es dann auch möglich, den Luftstrom oder entsprechende Zusatzkomponenten der Trennvorrichtung zumindest zeitweise mit geringerer Leistung zu betreiben oder abzuschalten.

Mit Blick auf den insgesamt komplexen Förderstrom des Gemisches in der Maschine ist vorgesehen, dass der zumindest eine zugeführte Förderstrom zumindest teilweise im Bereich vor dem Rückhalteelement umleitbar ist.

Dabei wird der mit der an sich bekannten Fördereinrichtung zugeführte Förderstrom so geleitet, dass dieser dann insbesondere ohne Kontakt mit dem Rückhalteelement der Trennvorrichtung direkt in eine nachgeordnete und/oder neben diesem befindliche Förderzone abgeleitet werden kann. Dieses Konzept der Umleitung des Förderstromes ist vorzugsweise darauf abgestellt, dass im Bereich eines endseitigen Elementes der Fördereinrichtung ein konstruktiv variabel ausführbarer Wirkmechanismus eingesetzt wird. Ebenso ist denkbar, dass die vorgesehene Umleitung des Förderstromes auch unmittelbar im Bereich der Fördereinrichtung angeschlossen wird oder an deren Eingangselementen eine Wirkbaugruppe installiert wird.

Die konstruktiv optimale Umsetzung dieser erfindungsgemäßen Gemisch-Führung sieht vor, dass im Bereich des Rückhalteelementes eine - zumindest als ein Bypass wirkende - Umleitbaugruppe angeordnet wird. Diese Umleitbaugruppe kann in weitgehend variablen Gebrauchslagen positioniert werden, derart, dass auch eine Teilung des Förderstromes mittels der Umleitbaugruppe möglich ist. Die Struktur der Umleitbaugruppe ist dabei an flexible Förderbedingungen anzupassen, wobei die Umleitbaugruppe vorteilhaft auch aus mehreren Leitelementen zusammengesetzt sein kann. Diese Leitelemente können ihrerseits einzeln beweglich und/oder verschiebbar sein, so dass variable Ableitrichtungen in unterschiedliche Umleitzonen bzw. Bypass-Strukturen möglich sind.

Für eine optimale Nutzung der Maschine im Bereich der integrierten Trennvorrichtung ist es möglich, dass zumindest eines der Leitelemente bzw. die gesamte Umleitbaugruppe als eine von Hand bedienbare Konstruktion ausgeführt sind. Damit kann die Maschine vor einem entsprechenden Einsatz ausgerüstet werden, oder es erfolgt während einer Bearbeitungspause eine Umrüstung des Systems.

Die zweckmäßige Gestaltung der Umleitbaugruppe sieht vor, dass diese in Form einer das Rückhalteelement zumindest bereichsweise übergreifenden Brücke ausgebildet ist. Diese in ihrer Überbrückungslänge variable Konstruktion kann in weiteren Ausführungsformen auch bis in den Wirkbereich der das Gemisch zuführenden Fördereinrichtung verlängert sein.

In einfachster Ausführung ist vorgesehen, dass die mit einer eine Transportschräge bildenden Gleitplatte versehene Brücke von Hand in die Gebrauchslage verlagerbar ist. Damit wird eine "passive" Brücke in das System integriert, bei der die Gleitplatte als variabel einsetzbares Leitelement wirksam ist. Diese passive Brücke kann im Bereich der die Transportschräge bildenden Gleitplatte vorzugsweise mit einer Siebstruktur versehen werden, so dass damit eine zusätzliche Reinigungsfunktion auf das Gemisch eingeleitet werden kann. Ebenso ist denkbar, dass die Gleitplatte auf unterschiedliche Transportschrägen einstellbar ausgeführt wird. Durch diese Einstellung kann der Gemischablauf beim Übergang von der Förderstrecke beeinflusst werden.

Die Brücke bildet eine zusätzlich in das Maschinenkonzept integrierbare Baugruppe, wobei diese als vormontierte Einheit bereitgestellt werden kann und durch die konstruktive Gestaltung ein Einschieben oder Einschwenken in die Gebrauchslage realisierbar ist.

Ausgehend von den vorbeschriebenen Ausführungen der Umleitbaugruppe in Form der Leitelemente und der "passiven" Brücke ist vorgesehen, dass für verbesserte Steuer- und Regeloperationen diese Baugruppen auch mit einem jeweiligen steuerbaren Antrieb versehen sein können. Diese Baugruppen insgesamt oder deren funktionale Einzelteile können mit elektrischen oder hydraulischen Antriebsorganen und deren variable Steuerungen an unterschiedliche Erntebedingungen angepasst werden.

Eine erste Ausführung dieser "angetriebenen" Umleitbaugruppe sieht vor, dass diese in Form einer einen motorischen Drehantrieb aufweisenden Fördereinheit ausgebildet ist. Dabei kann beispielsweise ein Siebband als die Fördereinheit genutzt werden. Diese kann für eine optimale Positionierung in der auch variablen Gebrauchslage eine schwenk- und/oder schiebbare Stützverbindung im Gestell der Maschine aufweisen. Damit kann diese Fördereinheit als permanentes Bauteil in der Maschine verbleiben, und die bedarfsgerechte Zu- bzw. Abschaltung dieses Umleit-Systems ist mit geringem Aufwand möglich.

Ausgehend davon, dass die das Siebband aufweisende Fördereinheit im Wesentlichen oberhalb des Rückhalteelementes der Trennvorrichtung angeordnet ist, ist denkbar, dass diese Fördereinheit aus ihrer umleitenden Gebrauchslage auch in zusätzliche Nutzpositionen innerhalb der Maschine verlagert werden kann. Damit wird der maschinenintern ablaufende Säuberungsprozess des Gemisches weiter unterstützt und die "Doppelfunktion" dieses Siebbandes effektiv umgesetzt.

Eine vorteilhafte Ausgestaltung des Systems sieht vor, dass die Umleitbaugruppe bzw. die dafür vorgesehene Fördereinheit zumindest bereichsweise in eine mit dem Luftstrom der Trennvorrichtung zusammenwirkende Gebrauchslage geschwenkt bzw. geschoben werden kann. Ausgehend vom Raumangebot innerhalb der Maschine können damit unterschiedliche Schwenkzonen überbrückt werden, so dass entsprechende funktionale Wirkungen und zusätzliche Ableitfunktionen erfüllt werden.

Insbesondere ist vorgesehen, dass die mit einem Siebband versehene Fördereinheit im Bereich eines hinter dem Rückhalteelement vorgesehenen Abförderbandes verlagerbar ist. Diese Verlagerung kann dabei in unterschiedliche Gebrauchslagen so erfolgen, dass durch eine Blasverlagerung aus dem Bereich der aktivierten Trennvorrichtung bewegtes Trenngut o. dgl. Gemischbestandteile mittels des optimal positionierten Siebbandes erfasst, innerhalb der Maschine weitergeleitet und direkt aus dieser abgeleitet werden können.

Eine weitere konstruktive Gestaltung zur Umleitung des Förderstromes im Bereich des Rückhalteelementes sieht vor, dass nunmehr im Bereich der das Gemisch zuführenden Fördereinrichtung zumindest eine in ihrer Transportlänge veränderbare Übernahmevorrichtung vorgesehen wird. Diese Übernahmevorrichtung befindet sich insbesondere am Ende einer das Gemisch nach oben fördernden Umlenkzone, die unmittelbar vor dem fluidischen Trennbett mit dem Rückhalteelement angeordnet ist. Dabei ist prinzipiell denkbar, auch in den Bereich der Übernahmevorrichtung einen Teilstrom des Luftstromes einzulenken.

Die optimale Ausführung der Übernahmevorrichtung sieht vor, dass diese als ein Siebband ausgebildet ist, das mittels einer insbesondere federelastischen Baugruppe in unterschiedliche Gebrauchslagen bewegt werden kann. Vorzugsweise ist das Siebband mittels einer eine permanente Spannkraft auf das Siebband ausübenden Stellfeder versehen, die am Rücklauftrum des Siebbandes mittels einer Rollenumlenkung angreift.

Die Abstützung des Siebbandes im Bereich der veränderbaren Transportlänge erfolgt mittels zweier Umlenkrollen, wovon eine ortsfest abgestützt ist und die andere mittels eines Hubzylinders entgegen der Stellfeder so verschoben werden kann, dass das Arbeitstrum des Siebbandes verlängert wird. Der Antrieb wird dabei durch den ortsfesten Hubzylinder eingeleitet, dessen Kolbenstange die verlagerbare Umlenkrolle erfasst.

Mit dem vorbeschriebenen Konzept der veränderbaren Transportlänge wird eine Übernahmevorrichtung geschaffen, die bis in eine das Rückhalteelement übergreifende und den Gutstrom bis in den Bereich des Abförderbandes verlagernde Auszugstellung bewegt werden kann. Damit ist eine "Brückenkonstruktion" mit veränderbarer Wirkebene geschaffen, und das System kann insgesamt variabel auf sich ändernde Gutströme eingestellt werden.

Weitere Einzelheiten und vorteilhafte Ausgestaltungen der Erfindung ergeben sich aus der nachfolgenden Beschreibung und der Zeichnung, in der zwei Ausführungsbeispiele der erfindungsgemäßen Vorrichtung mit Umleitbaugruppe veranschaulicht sind. In der Zeichnung zeigen:
- Fig. 1: eine Seitenansicht einer den Stand der Technik bildenden Trennvorrichtung für eine Kartoffelerntemaschine,
- Fig. 2: eine teilweise geschnittene Seitenansicht mit einer in die Kartoffelerntemaschine integrierten Trennvorrichtung und eine erste Ausführung einer Umleitbaugruppe im Bereich des Rückhalteelementes,
- Fig. 3: eine Seitenansicht ähnlich Fig. 2 mit der Umleitbaugruppe in einer veränderten Nutzstellung,
- Fig. 4: eine Perspektivdarstellung des Systems ähnlich Fig. 2,
- Fig. 5: eine Perspektivdarstellung ähnlich Fig. 4,
- Fig. 6: eine vergrößerte Ausschnittsdarstellung des Systems im Bereich der Trennvorrichtung mit einer zweiten Ausführung der Umleitbaugruppe,
- Fig. 7: eine Seitenansicht ähnlich Fig. 2 mit einer im Bereich der Fördereinrichtung vorgesehenen Übernahmevorrichtung in ausgeschobener Gebrauchslage, und
- Fig. 8: eine Seitenansicht ähnlich Fig. 7 mit in verkürzter Gebrauchsposition befindlicher Übernahmevorrichtung.

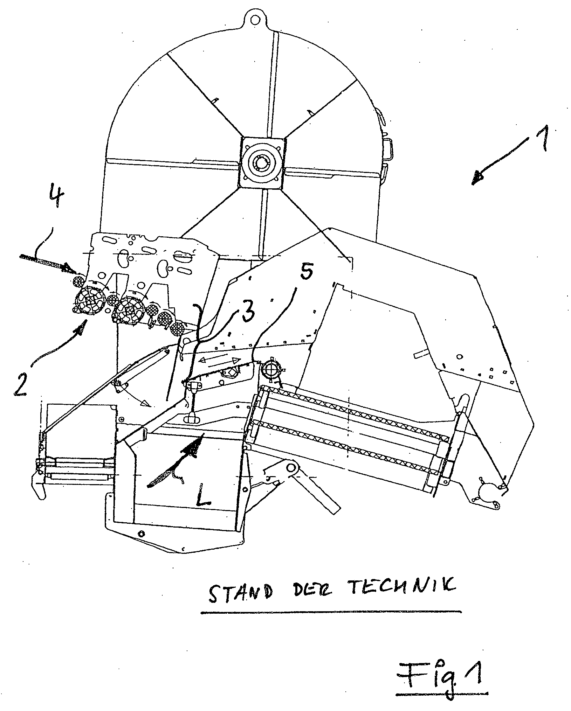

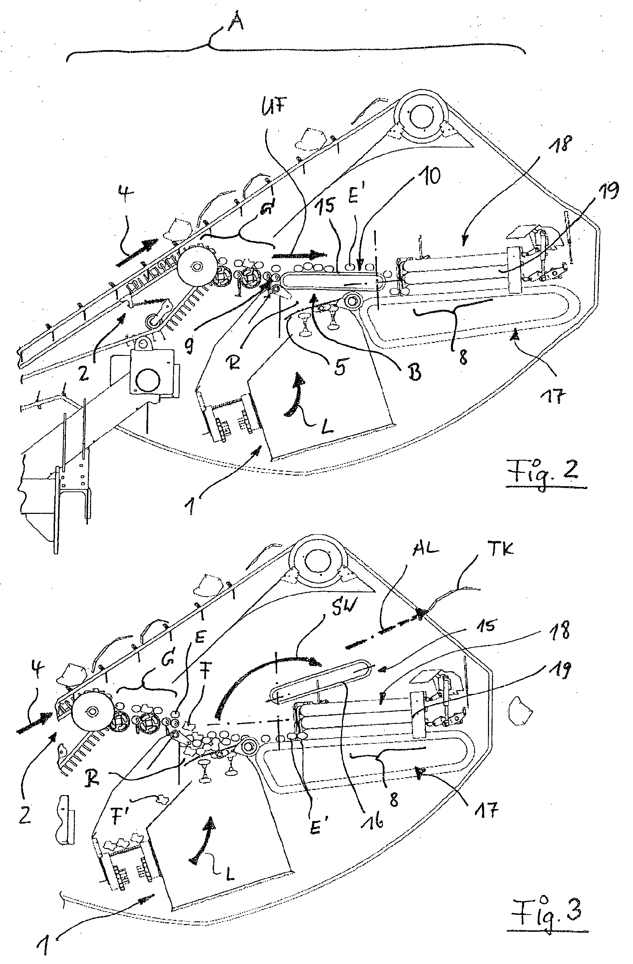

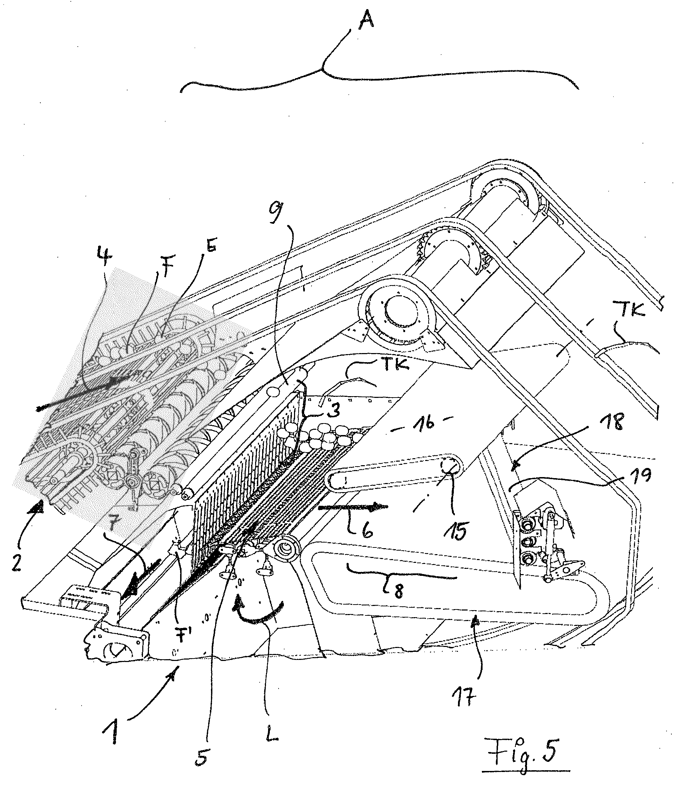

In Fig. 1 ist eine aus dem Stand der Technik bekannte, insgesamt mit 1 bezeichnete Trennvorrichtung dargestellt, die gemäß Darstellung in Fig. 2 in eine Kartoffelerntemaschine A integriert ist. Eine derartige Trennvorrichtung 1 ist zum Trennen von Kartoffeln o. dgl. Erntegut E aus einem Gemisch G mit Kluten, Steinen und ähnlichen Festkörpern F vorgesehen. Das Gemisch G wird bei derartigen Systemen als ein Förderstrom 4 mittels einer insgesamt mit 2 bezeichneten Fördereinrichtung aus einem nicht näher dargestellten Aufnahmebereiche der Maschine A heraus zugeführt. Dieser Förderstrecke folgend, gelangt das Gemisch G in den Bereich einer Fallstufe 3 (Fig. 1), von der aus das sich zunehmend lockernde Gemisch G auf ein Rückhalteelement 5 im Bereich der Trennvorrichtung bewegt wird. In diesem Bereich erfolgt die eigentliche "Sortierung" der wesentlichen Komponenten des Gemisches G, wobei das Erntegut E' und die Festkörper F' in einer jeweiligen, im Wesentlichen entgegengesetzt verlaufenden Förderrichtung getrennt weitergeleitet werden (Pfeil 6, 7; Fig. 5). Diese Trennphase wird durch den mittels eines externen Gebläses (nicht dargestellt) erzeugten Luftstrom L unterstützt, so dass durch zusätzlichen Energieeintrag eine wesentliche Verbesserung des Trennprozesses erreicht werden kann.

Das erfindungsgemäße Konzept einer variabel einsetzbaren Trennvorrichtung 1 geht nunmehr davon aus, dass die Säuberungswirkung der Trennvorrichtung 1 auf einer Maschine A nicht in jedem Einsatzfall notwendig ist. Dies kann beispielsweise dann der Fall sein, wenn ein - insbesondere durch fehlende Steine oder Kluten - weitgehend von harten Fremdkörpern freier Gemischstrom G im System zu handhaben ist.

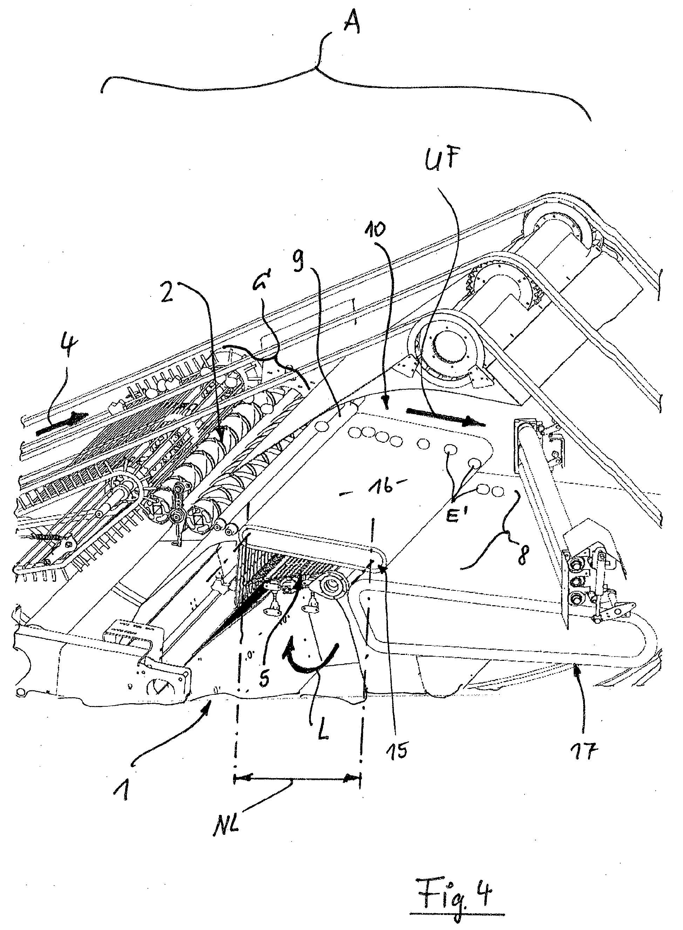

Für diesen Anwendungsfall sieht die erfindungsgemäße Konstruktion insbesondere vor, dass der zumindest eine zugeführte Förderstrom 4 zumindest teilweise im Bereich vor dem Rückhalteelement 5 umgeleitet werden kann. Ein Ziel dieser Umleitung kann es dabei sein, dass der Förderstrom 4 mit der Fördereinrichtung 2 in üblicher Weise innerhalb der Maschine A bewegt wird und entlang der Förderstrecke ohne Kontakt mit dem Rückhalteelement 5 auch direkt in eine nachgeordnete und/oder neben diesem befindliche Förderzone 8 (Fig. 4) abgeleitet werden kann.

Aus der allgemeinen Bewegungsfolge des Gemisches G in Fig. 2 wird deutlich, dass die mit einem Pfeil UF verdeutlichte Umleitung des Förderstromes 4 insbesondere ab dem Bereich eines endseitigen Elementes 9 der Fördereinrichtung 2 wirksam ist. Die konstruktive Umsetzung dieses Systems sieht vor, dass im Bereich des Rückhalteelementes 5 eine als Bypass vorgesehene Umleitbaugruppe 10 wirksam ist. Damit ist eine denkbare Ausführung der als Zusatzkonstruktion in das Maschinenkonzept A integrierten Bypass-Struktur gezeigt.

Die konstruktive Umsetzung dieser Umleitbaugruppe 10 sieht vor, dass für diese eine Positionierung in variablen Gebrauchslagen so möglich ist, dass für unterschiedliche Förderkonzepte eine jeweils optimale Wirkposition vorgegeben wird. Dabei kann insbesondere vorgesehen sein, dass eine Teilung des Förderstromes 4 erfolgt und dabei beispielsweise abweichend von der Umleitrichtung UF auch die Verlagerung in eine jeweilige Querrichtung erfolgen kann (jeweils nicht dargestellt).

Ausgehend von der Umleitfunktion im Bereich der Trennvorrichtung 1 ist eine Ausgestaltung der Umleitbaugruppe 10 auch mit mehreren Leitelementen (nicht dargestellt) denkbar. Diese Leitelemente können dabei als jeweils einzeln positionierbare Teile ausgebildet sein. Ebenso ist denkbar, dass zumindest eines der Leitelemente der Umleitbaugruppe 10 von Hand verlagerbar ist.

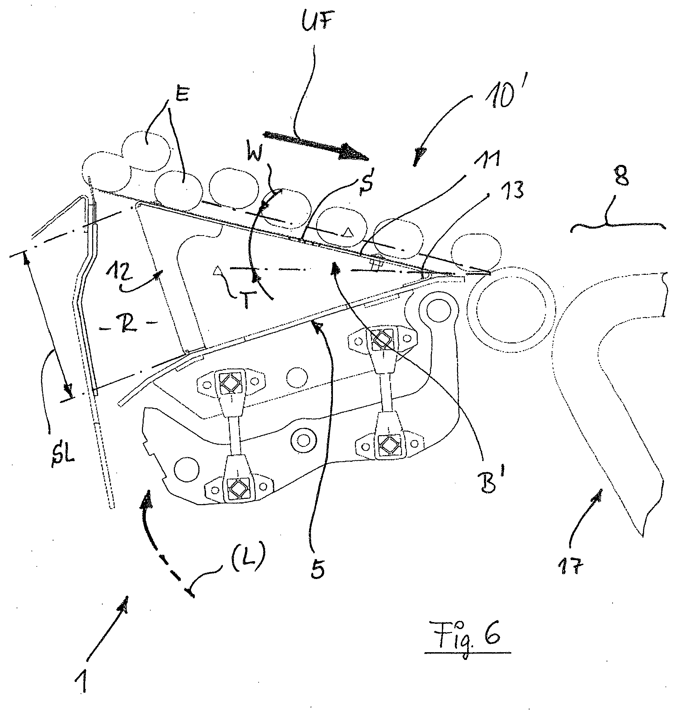

Aus den Darstellungen gemäß Fig. 2 bis Fig. 6 wird deutlich, dass das variable Konzept der Umleitbaugruppe 10 für den Bereich oberhalb des Rückhalteelementes 5 zu einer Ausgestaltung nach Art einer sich über den Rüttelraum R (Fig. 2, Fig. 3) erstreckenden Brücke B bzw. B' (Fig. 6) führt. Diese Brücken-Konstruktion ist insbesondere darauf abgestellt, dass nur der Bereich des beweglichen Rückhalteelementes 5 durch eine Umleitfunktion UF vom Gutstrom G freigehalten werden soll. Daraus resultiert dann die bereits dargestellte Möglichkeit, den Aufbau des Luftstromes L bzw. die Sortierfunktion der gesamten Trennvorrichtung 1 aus dem Antriebskonzept der Maschine A auszukoppeln, damit durch diese "Stilllegung" zumindest phasenweise mit geringerer Antriebsenergie zu arbeiten und so einen "Energiesparmodus" zu nutzen.

In der zweiten Ausführung des Systems gemäß Fig. 6 ist die Brücke B' in Form eines "passiven" Elementes ausgeführt. Diese Brücke B' ist dabei mit zumindest einer eine Transportschräge (Winkel W) bildenden Gleitplatte 11 versehen. Diese insbesondere von Hand in der dargestellten Gebrauchslage zu positionierende Brücke B' weist im Bereich der die Transportschräge W bildenden Gleitplatte 11 eine spezielle Siebstruktur S auf, so dass durch diese Gleitplatte 11 hindurch tretende Teile des Trenngutes T unter Schwerkraftwirkung in den unteren Teil der Maschine abgeleitet werden.

In der dargestellten Ausführung ist die Brücke B mit einem den Neigungswinkel W bestimmenden Stützschenkel 12 versehen, der insbesondere eine der Höhe der Fallstufe 3 (Fig. 1) entsprechende Länge SL aufweist. Zur ortsfesten Abstützung auf dem Rückhalteelement 5 ist gegenüberliegend dem Schenkel 12 eine Stützkontur 13 vorgesehen, so dass die Brücke B' insgesamt eine stabile Einbaulage aufweist. Diese Brücke B' ist insbesondere als eine autark vormontierte Einheit ausgebildet, die ggf. in die Gebrauchslage auf das Rückhalteelement 5 auflegbar oder aufschiebbar ist. Durch entsprechende Verbinder kann die Brücke B' auch formschlüssig auf dem Rückhalteelement 5 fixiert werden. Ebenso ist denkbar, die Brücke B' an einer Schwenkkonstruktion (nicht dargestellt) zu fixieren, so dass bei hinreichendem Freiraum innerhalb der Maschine A eine Verlagerung aus der Gebrauchslage möglich ist und auch eine permanente Mitführung der Brücke B' denkbar ist.

Ausgehend von der vorbeschriebenen Umleitbaugruppe 10, 10' in Form der "passiven" Brücke B' bzw. den allgemein beschriebenen Leitelementen ist auch eine konstruktive Erweiterung dieses Konzeptes vorgesehen. Insbesondere ist eine weitere Verbesserung dadurch zu erreichen, dass die Umleitbaugruppe 10, 10' in sämtlichen ihrer Ausführungsformen auch mit zumindest einer steuerbaren Antriebseinheit versehen werden kann.

Aus den Darstellungen gemäß Fig. 2 bis Fig. 5 wird in Prinzipdarstellung die Ausbildung einer einen Antrieb aufweisenden Fördereinheit 15 deutlich. Diese aktiv angetriebene Fördereinheit 15 nimmt eine - der "passiven" Brücke B' gemäß Fig. 6 entsprechende - Nutzlage oberhalb des Rückhalteelementes 5 ein (Fig. 4). Denkbar ist dabei, dass durch entsprechende Gestaltung der Fördereinheit 15 auch eine erweiterte Nutzlänge NL (Fig. 4), die beispielsweise bis in den Bereich der Fördereinrichtung 2 reicht, genutzt werden kann.

Für die Positionierung dieser Fördereinheit 15 in der jeweiligen Gebrauchslage sind unterschiedliche Verlagerungsmöglichkeiten denkbar. Dabei kann die Fördereinheit 15 zur Positionierung in ihrer Gebrauchslage eine schwenkbare und/oder schiebbare Stützverbindung innerhalb der Maschine A aufweisen.

In zweckmäßiger Ausführung ist die als ein Siebband 16 (Fig. 4) ausgebildete Fördereinheit 15 als eine schwenkbare Baugruppe ausgeführt, so dass durch eine entsprechende Verlagerung (Winkel SW, Fig. 4, Fig. 5) eine Freigabe des Rückhalteelementes 5 für dessen "Normalfunktion" erreicht werden kann. Die Verlagerung kann dabei mittels einer Steuereinheit (nicht dargestellt) auch als eine Schubbewegung oder eine Schwenk-Hub-Bewegung ausgeführt werden.

Ausgehend von dieser Schwenkverlagerung SW sieht das Konzept vor, dass das verschwenkte Siebband 16 in der gemäß Fig. 5 erreichten Nichtgebrauchslage eine zusätzliche Nutzposition innerhalb der Maschine A definieren kann. Dies resultiert daraus, dass die jeweilige Umleitbaugruppe 10 insgesamt - oder zumindest das vorbeschriebene Siebband 16 - zumindest bereichsweise in eine mit dem Luftstrom L der Trennvorrichtung 1 zusammenwirkende Lage gebracht werden kann/können. Dabei wird deutlich, dass durch einen Teilluftstrom AL verlagertes Trenngut TK in den Bereich des Siebbandes 16 gelangt und hier die Ableitung von Trenngut TK unterstützt werden kann.

In den Darstellungen gemäß Fig. 3 und Fig. 5 ist diese um den Winkel SW geschwenkte Einbausituation dargestellt, wobei das Siebband 16 oberhalb eines in die Maschine A integrierten Leitsystems 18 angeordnet ist und damit das Trenngut TK in eine hintere Austragposition verlagert werden kann.

Dabei ist die mit dem insbesondere als Krautband ausgebildeten Siebband 16 versehene Fördereinheit 15 so positioniert, dass diese im Bereich eines hinter dem Rückhalteelement 5 vorgesehenen Abförderbandes 17 verläuft und damit jeweiliges, durch eine Blasverlagerung bewegtes Trenngut TK mittels des Siebbandes 16 zusätzlich abgeleitet werden kann. Insbesondere ist vorgesehen, dass das Siebband 16 im Bereich eines zur Klutentrennung und Kartoffelumlenkung vorgesehenen Walzenabstreifers 19 den Trenn- und Reinigungsvorgang unterstützt.

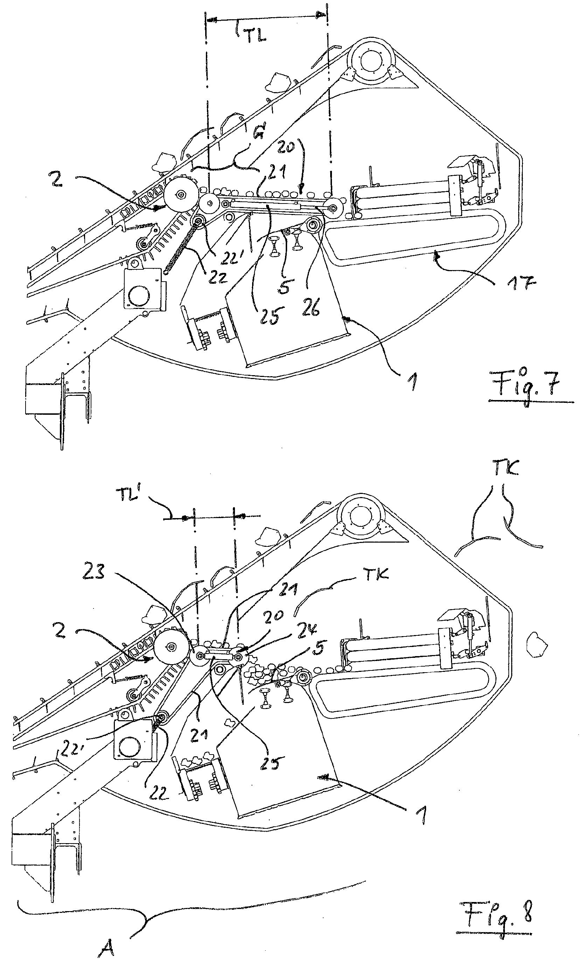

Ausgehend von der in Fig. 1 und Fig. 2 gezeigten Konstruktion der Kartoffelerntemaschine A mit der dort dargestellten Fördereinrichtung 2 zur Verlagerung des Gemisches G ist in Fig. 7 und Fig. 8 eine Variante zur Umleitung des Förderstromes 4 mittels einer Übernahmevorrichtung 20 dargestellt. Diese Übernahmevorrichtung 20 ist unmittelbar anschließend an die Hochförderphase des Gemisches G am Ende der Fördereinrichtung 2 so angeordnet, dass hier die als unterschiedliche Transportlänge TL und TL' gezeichneten Wirkstrecken eingestellt werden können.

Dabei ist die Übernahmevorrichtung 20 vorzugsweise als ein Siebband 21 ausgebildet. Dieses ist mittels einer am Rücklauftrum des Siebbandes 21 angreifenden Stellfeder 22 als Gegenhalter in einer "vorgespannten" Lage (Fig. 8) gehalten. In diesem Bereich ist das umlaufende Siebband 21 über eine Rolle 22' geführt.

Im Bereich einer die Transportlängen TL, TL' bildenden Wirkstrecke weist das Siebband 21 zwei Umlenkrollen 23 und 24 auf, in deren Bereich mittels eines insbesondere als Hubzylinder 25 ausgebildeten Stellorgans eine Längenveränderung möglich ist. Aus der Ausschubstellung TL gemäß Fig. 7 wird deutlich, dass der Hubzylinder 25 im Nahbereich der Anbindung an die Fördereinrichtung 2 ortsfest abgestützt ist. Das vordere Ende der Kolbenstange 26 erfasst dabei die zweite der Umlenkrollen 24 so, dass diese insbesondere geradlinig verlagerbar ist.

In der dargestellten Ausschubstellung der Kolbenstange 26 ist der obere Trum des Siebbandes 21 in eine das Rückhalteelement 5 überbrückende und bis in den Bereich des Abförderbandes 17 verlängernde Gebrauchsstellung verschoben. Bei dieser Verschiebung mittels des Hydraulikzylinders 25 wird gleichzeitig eine konstante Spannung des Siebbandes 21 dadurch aufrecht erhalten, dass die Stellfeder 22 den entsprechenden Längenausgleich herstellt. Bei einer Rückverlagerung der Kolbenstange 26 wird auch die Stellfeder 22 in die gemäß Fig. 8 ersichtliche Ausgangslage zurückbewegt, und die Trennfunktion des Rückhalteelementes 5 im Bereich der Vorrichtung 1 ist aktivierbar.

## Patentansprüche

1. Trennvorrichtung für eine Kartoffelerntemaschine oder eine Aufbereitungsmaschine (A) zum Trennen von Kartoffeln o. dgl. Erntegut (E) aus einem Gemisch (G) mit Kluten, Steinen und ähnlichen Festkörpern (F), mit einer das im Wesentlichen kompakte Gemisch (G) als einen Förderstrom (4) zuführenden Fördereinrichtung (2), von der aus das in den Bereich zumindest einer Fallstufe (3) verlagerte und dabei mittels eines Fördermediums in Form eines Luftstromes (L) beeinflusste Gemisch (G) trennbar ist, wobei nachfolgend der eine Auflockerung des Gemisches (G) bewirkenden Fallstufe (3) zumindest ein den fallenden Trenngütern (E, F) entgegen gerichtetes und mit dem zumindest einen Luftstrom (L) zusammenwirkendes Rückhalteelement (5) vorgesehen ist, derart, dass von diesem ausgehend als jeweils sortierte Einzelteile zumindest das Erntegut (E) und die Festkörper (F) in einer jeweiligen im Wesentlichen entgegengesetzt verlaufenden Förderrichtung (6, 7) getrennt weiterleitbar sind, **dadurch gekennzeichnet, dass** der zumindest eine zugeführte Förderstrom (4) zumindest teilweise im Bereich vor dem Rückhalteelement (5) umleitbar ist.

2. Trennvorrichtung nach Anspruch 1, **dadurch gekennzeichnet, dass** der Förderstrom (4) mit der Fördereinrichtung (2) zugeführt und ohne Kontakt mit dem Rückhalteelement (5) direkt in eine nachgeordnete und/oder neben diesem befindliche Förderzone ableitbar ist.

3. Trennvorrichtung nach Anspruch 1 oder 2, **dadurch gekennzeichnet, dass** die Umleitung des Förderstromes (4) im Bereich eines endseitigen Elementes (9) der Fördereinrichtung (2) wirksam ist.

4. Trennvorrichtung nach einem der Ansprüche 1 bis 3, **dadurch gekennzeichnet, dass** zumindest im Bereich des Rückhalteelementes (5) eine als Bypass wirkende Umleitbaugruppe (10, 10') vorgesehen ist.

5. Trennvorrichtung nach Anspruch 4, **dadurch gekennzeichnet, dass** die Umleitbaugruppe (10, 10') in variablen Gebrauchslagen positionierbar ist, derart, dass eine Teilung des Förderstromes (4) erfolgt.

6. Trennvorrichtung nach Anspruch 4 oder 5, **dadurch gekennzeichnet, dass** die Umleitbaugruppe (10, 10') aus mehreren Leitelementen gebildet ist.

7. Trennvorrichtung nach einem der Ansprüche 4 bis 6, **dadurch gekennzeichnet, dass** die Umleitbaugruppe (10, 10') mit einzeln positionierbaren Leitelementen versehen ist.

8. Trennvorrichtung nach einem der Ansprüche 4 bis 7, **dadurch gekennzeichnet, dass** zumindest eines der Leitelemente der Umleitbaugruppe (10, 10') von Hand verlagerbar ist.

9. Trennvorrichtung nach Anspruch 4, **dadurch gekennzeichnet, dass** die Umleitbaugruppe (10, 10') als eine das Rückhalteelement (5) zumindest bereichsweise übergreifende Brücke (B, B')ausgebildet ist.

10. Trennvorrichtung nach Anspruch 9, **dadurch gekennzeichnet, dass** die mit einer eine Transportschräge (Winkel W) bildenden Gleitplatte (11) versehene Brücke (B') von Hand in die Gebrauchslage verlagerbar ist.

11. Trennvorrichtung nach Anspruch 9 oder 10, **dadurch gekennzeichnet, dass** die Brücke (B') im Bereich der die Transportschräge (W) bildenden Gleitplatte (11) mit einer Siebstruktur (S) versehen ist.

12. Trennvorrichtung nach einem der Ansprüche 9 bis 11, **dadurch gekennzeichnet, dass** die Transportschräge (W) der Brücke (B') einstellbar ist.

13. Trennvorrichtung nach einem der Ansprüche 9 bis 12, **dadurch gekennzeichnet, dass** die Brücke (B') als vormontierte Einheit in die Gebrauchslage einschiebbar oder schwenkbar ist.

14. Trennvorrichtung nach einem der Ansprüche 9 bis 13, **dadurch gekennzeichnet, dass** die Umleitbaugruppe (10, 10') im Bereich der Leitelemente und/oder der Brücke (B) mittels zumindest einer jeweiligen steuerbaren Antriebseinheit verlagerbare Bauteile aufweist.

15. Trennvorrichtung nach Anspruch 4, **dadurch gekennzeichnet, dass** die Umleitbaugruppe (10) in Form einer einen Antrieb aufweisenden Fördereinheit (15) ausgebildet ist.

16. Trennvorrichtung nach Anspruch 15, **dadurch gekennzeichnet, dass** die Fördereinheit (15) zur Positionierung in der Gebrauchslage eine schwenkbare und/oder schiebbare Stützverbindung aufweist.

17. Trennvorrichtung nach Anspruch 15 oder 16, **dadurch gekennzeichnet, dass** die ein Siebband (16) aufweisende Fördereinheit (15) aus ihrer umleitenden Gebrauchslage in zusätzliche Nutzpositionen innerhalb der Maschine (A) verlagerbar (Winkel SW) ist.

18. Trennvorrichtung nach einem der Ansprüche 4 bis 17, **dadurch gekennzeichnet, dass** die Umleitbaugruppe (10) zumindest bereichsweise in eine mit dem Luftstrom (L, AL) der Trennvorrichtung (1) zusammenwirkende Gebrauchslage schwenkbar und/oder verschiebbar ist.

19. Trennvorrichtung nach Anspruch 18, **dadurch gekennzeichnet, dass** die mit einem Siebband (16) versehene Fördereinheit (15) im Bereich eines hinter dem Rückhalteelement (5) vorgesehenen Abförderbandes (17) vorgesehen ist, derart, dass über diesem durch eine Blasverlagerung (AL) bewegtes Trenngut (TK) mittels des Siebbandes (16) ableitbar ist.

20. Trennvorrichtung für eine Kartoffelerntemaschine (A) gemäß dem Anspruch 1, **dadurch gekennzeichnet, dass** die das Gemisch (G) zuführende Fördereinrichtung (2) mit zumindest einer in ihrer Transportlänge (TL, TL') veränderbaren Übernahmevorrichtung (20) zusammenwirkt.

21. Trennvorrichtung nach Anspruch 20, **dadurch gekennzeichnet, dass** die Übernahmevorrichtung (20) als ein Siebband (21) ausgebildet ist.

22. Trennvorrichtung nach Anspruch 21, **dadurch gekennzeichnet, dass** das Siebband (21) der Übernahmevorrichtung (20) mittels einer Stellfeder (22) gehalten ist.

23. Trennvorrichtung nach einem der Ansprüche 21 bis 22, **dadurch gekennzeichnet, dass** das mittels zweier Umlenkrollen (23, 24) die Transportlänge (TL, TL') vorgebende Siebband (21) mittels eines Hubzylinders (25) in der Länge veränderbar ist.

24. Trennvorrichtung nach Anspruch 23, **dadurch gekennzeichnet, dass** der Hubzylinder (25) im Bereich der Fördereinrichtung (2) an der ersten der Umlenkrollen (23) ortsfest abgestützt ist und das vordere Ende der Kolbenstange (26) die zweite der Umlenkrollen (24) verlagerbar erfasst.

25. Trennvorrichtung nach einem der Ansprüche 20 bis 24, **dadurch gekennzeichnet, dass** die Übernahmevorrichtung (20) in eine das Rückhalteelement (5) übergreifende und den Gutstrom (G) bis in den Bereich des Abförderbandes (17) verlagernde Auszugstellung verlagerbar ist.

## Claims

1. Separating apparatus for a potato harvesting machine or a processing machine (A) for separating potatoes or similar harvested material (E) from a mixture (G) containing clods, stones and rocks and similar solids (F), comprising a conveying device (2) which supplies the substantially compact mixture (G) in the form of a conveying flow (4) and from where the mixture (G) that is moved into the region of at least one drop stage (3) and is in the process influenced by a conveying medium in the form of an air stream (L) can be separated, at least one retaining element (5) which faces away from the separated goods (E, F) being dropped and interacts with the at least one air stream (L) being provided downstream of the drop stage (3) that causes the mixture (G) to loosen, such that at least the harvested material (E) and the solids (F) can each be separately transported further, away from said retaining element, in respective, substantially opposing conveying directions (6, 7), as sorted individual parts, **characterised in that** at least some of the at least one conveying flow (4) being supplied can be deflected in the region in front of the retaining element (5).

2. Separating apparatus according to claim 1, **characterised in that** the conveying flow (4) is supplied by the conveying device (2) and can be diverted directly into a conveyor zone downstream of and/or adjacent to the retaining element (5) without making contact with said element.

3. Separating apparatus according to either claim 1 or claim 2, **characterised in that** the conveying flow (4) is deflected in the region of an element (9) at the end of the conveying device (2).

4. Separating apparatus according to any of claims 1 to 3, **characterised in that** a deflection assembly (10, 10') which functions as a bypass is provided at least in the region of the retaining element (5).

5. Separating apparatus according to claim 4, **characterised in that** the deflection assembly (10, 10') can be positioned in variable use positions so as to divide the conveying flow (4).

6. Separating apparatus according to either claim 4 or claim 5, **characterised in that** the deflection assembly (10, 10') is formed of a plurality of guide elements.

7. Separating apparatus according to any of claims 4 to 6, **characterised in that** the deflection assembly (10, 10') is provided with guide elements that can be individually positioned.

8. Separating apparatus according to any of claims 4 to 7, **characterised in that** at least one of the guide elements of the deflection assembly (10, 10') can be moved by hand.

9. Separating apparatus according to claim 4, **characterised in that** the deflection assembly (10, 10') is designed as a bridge (B, B') that extends over at least portions of the retaining element (5).

10. Separating apparatus according to claim 9, **characterised in that** the bridge (B') provided with a sliding plate (11) that forms a transport slope (angle W) can be moved into the use position by hand.

11. Separating apparatus according to either claim 9 or claim 10, **characterised in that** the bridge (B') is provided with a sieve structure (S) in the region of the sliding plate (11) that forms the transport slope (W).

12. Separating apparatus according to any of claims 9 to 11, **characterised in that** the transport slope (W) of the bridge (B') is adjustable.

13. Separating apparatus according to any of claims 9 to 12, **characterised in that** the bridge (B') can be slid or pivoted into the use position as a preassembled unit.

14. Separating apparatus according to any of claims 9 to 13, **characterised in that** the deflection assembly (10, 10') comprises components in the region of the guide elements and/or of the bridge (B) that can be moved by at least one controllable drive unit in each case.

15. Separating apparatus according to claim 4, **characterised in that** the deflection assembly (10) is formed as a conveyor unit (15) comprising a drive.

16. Separating apparatus according to claim 15, **characterised in that** the conveyor unit (15) comprises a pivotable and/or slideable support connection for positioning said unit in the use position.

17. Separating apparatus according to either claim 15 or claim 16, **characterised in that** the conveyor unit (15) comprising a screen belt (16) can be moved (angle SW) out of its deflecting use position into additional use positions inside the machine (A).

18. Separating apparatus according to any of claims 4 to 17, **characterised in that** the deflecting assembly (10) can be pivoted and/or displaced at least in regions into a use position in which it interacts with the air stream (L, AL) of the separating apparatus (1).

19. Separating apparatus according to claim 18, **characterised in that** the conveyor unit (15) provided with a screen belt (16) is provided in the region of a discharge belt (17) provided behind the retaining element (5) such that separated goods (TK) which are moved over said discharge belt by a blowing displacement (AL) can be diverted by the screen belt (16).

20. Separating apparatus for a potato harvesting machine (A) according to claim 1, **characterised in that** the conveying device (2) supplying the mixture (G) interacts with at least one transfer device (20), the transport length (TL, TL') of which can be changed.

21. Separating apparatus according to claim 20, **characterised in that** the transfer device (20) is formed as a screen belt (21).

22. Separating apparatus according to claim 21, **characterised in that** the screen belt (21) of the transfer device (20) is held by means of an adjustment spring (22).

23. Separating apparatus according to either of claims 21 to 22, **characterised in that** the length of the screen belt (21), which belt predetermines the transport length (TL, TL') by means of two deflection rollers (23, 24), can be changed by a lifting cylinder (25).

24. Separating apparatus according to claim 23, **characterised in that** the lifting cylinder (25) is supported in a fixed manner against the first of the deflection rollers (23) in the region of the conveying device (2), and the front end of the piston rod (26) movably touches the second of the deflection rollers (24).

25. Separating apparatus according to any of claims 20 to 24, **characterised in that** the transfer device (20) can be moved into an extended position in which it extends over the retaining element (5) and moves the material flow (G) as far as the region of the discharge belt (17).

## Revendications

1. Dispositif de séparation pour récolteuse de pommes de terre ou machine de traitement (A) pour séparer des pommes de terre ou produit de récolte analogue (E) d'un mélange (G) comportant des mottes de terre, des pierres et des corps solides similaires (F), le dispositif de séparation comprenant un dispositif de transport (2) qui amène le mélange (G) sensiblement compact en tant que flux d'alimentation (4) et duquel le mélange (G), déplacé jusque dans la région d'au moins un étage de chute (3) et influencé au moyen d'un médium de transport se présentant sous la forme d'un flux d'air (1), peut être séparé, au moins un élément de retenue (5), qui est orienté dans le sens opposé à la chute des produits de séparation (E, F) et qui coopèrent avec l'au moins un flux d'air (L), étant prévu à la suite de l'étage de chute (3) provoquant une désagrégation du mélange (G) de sorte que, à partir de cet élément de retenue, au moins le produite de récolte (E) et les corps solides (F) peuvent être emportés séparément, chacun sous forme d'éléments individuels triés, dans des sens de transport (6, 7) opposés respectifs sensiblement opposés, **caractérisé en ce que** l'au moins un flux d'alimentation (4) amené peut être dévié au moins partiellement dans la région en avant de l'élément de retenue (5).

2. Dispositif de séparation selon la revendication 1, **caractérisé en ce que** le flux de transport (4) est amené au moyen du dispositif de transport (2) et peut être évacué directement dans une zone de transport située en aval et/ou à gauche à côté de l'élément de retenue (5) sans contact avec celui-ci.

3. Dispositif de séparation selon la revendication 1 ou 2, **caractérisé en ce que** la déviation du flux de transport (4) est opérante dans la région d'un élément d'extrémité (9) du dispositif de transport (2).

4. Dispositif de séparation selon l'une des revendications 1 à 3, **caractérisé en ce qu'**un module de déviation (10, 10'), servant de dérivation, est prévu au moins dans la région de l'élément de retenue (5).

5. Dispositif de séparation selon la revendication 4, **caractérisé en ce que** le module de déviation (10, 10') peut être positionné dans des positions d'utilisation variables de façon à effectuer une division du flux de transport (4).

6. Dispositif de séparation selon la revendication 4 ou 5, **caractérisé en ce que** le module de déviation (10, 10') est formé de plusieurs éléments de guidage.

7. Dispositif de séparation selon l'une des revendications 4 à 6, **caractérisé en ce que** le module de déviation (10, 10') est pourvu d'éléments de déviation positionnables individuellement.

8. Dispositif de séparation selon l'une des revendications 4 à 7, **caractérisé en ce qu'**au moins un des éléments de guidage du module de déviation (10, 10') peut être déplacé manuellement.

9. Dispositif de séparation selon l'une des revendications 1 à 4, **caractérisé en ce que** le module de déviation (10, 10') est conformé en pont (B, B') s'engageant au moins par endroit par-dessus l'élément de retenue (5).

10. Dispositif de séparation selon la revendication 9, **caractérisé en ce que** le pont (B'), pourvu d'une plaque coulissante (11) qui forme une rampe de transport (angle W), peut être déplacé manuellement dans la position d'utilisation.

11. Dispositif de séparation selon la revendication 9 ou 10, **caractérisé en ce que** le pont (B') est pourvu une structure de tamisage (S) dans la région de la plaque coulissant (11) qui forme la rampe de transport (W).

12. Dispositif de séparation selon l'une des revendications 9 à 11, **caractérisé en ce que** la rampe de transport (W) du pont (B') est réglable.

13. Dispositif de séparation selon l'une des revendications 9 à 12, **caractérisé en ce que** le pont (B') peut coulisser ou pivoter en tant qu'une unité pré-montée jusque dans la position d'utilisation.

14. Dispositif de séparation selon l'une des revendications 9 à 13, **caractérisé en ce que** le module de déviation (10, 10') comporte des composants déplaçables au moyen d'au moins une unité d'entraînement commandable respective dans la région des éléments de guidage et/ou du pont (B).

15. Dispositif de séparation selon la revendication 4, **caractérisé en ce que** le module de déviation (10) se présente sous la forme d'une unité de transport (15) comportant un entraînement.

16. Dispositif de séparation selon la revendication 15, **caractérisé en ce que** l'unité de transport (15) comporte une liaison de support pivotante et/ou coulissante pour le positionnement dans la position d'utilisation.

17. Dispositif de séparation selon la revendication 15 ou 16, **caractérisé en ce que** l'unité (15) de transport, comportant une bande de tamisage (16), peut être déplacée (angle SW) de sa position d'utilisation, de déviation, jusque dans des positions utiles supplémentaires à l'intérieur de la machine (A).

18. Dispositif de séparation selon l'une des revendications 1 à 17, **caractérisé en ce que** le module de déviation (10) peut être pivoté et/ou coulissé au moins par endroits dans une position d'utilisation de coopération avec le flux d'air (L, AL) du dispositif de séparation (1).

19. Dispositif de séparation selon la revendication 18, **caractérisé en ce que** l'unité de transport (15), pourvue d'une bande de tamisage (16), dans la région d'une bande d'évacuation (17) prévue en arrière de l'élément de retenue (5) de façon pouvoir dévier au moyen de la bande de tamisage (16) le produit de séparation (TK) déplacé au-dessus la bande d'évacuation par un système de déplacement par soufflage (AL).

20. Dispositif de séparation destiné à une récolteuse de pommes de terre (A) selon la revendication 1, **caractérisé en ce que** le dispositif de transport (2), qui amène le mélange (G), coopère avec au moins un dispositif de transfert (20) permettant de faire varier la longueur de transport (TL, TL') variable du dispositif de transport.

21. Dispositif de séparation selon la revendication 20, **caractérisé en ce que** le dispositif de transfert (20) est réalisé sous la forme d'une bande de tamisage (21).

22. Dispositif de séparation selon la revendication 21, **caractérisé en ce que** la bande de tamisage (21) du dispositif de transfert (20) est maintenue au moyen d'un ressort d'ajustage (22).

23. Dispositif de séparation selon l'une des revendications 21 à 22, **caractérisé en ce que** la bande de tamisage (21), définissant la longueur de transport (TL, TL') au moyen de deux rouleaux de renvoi (23, 24), peut être modifiée en longueur au moyen d'un vérin de levage (25).

24. Dispositif de séparation selon la revendication 23, **caractérisé en ce que** le vérin de levage (25) est supporté de façon fixe par le premier des rouleaux de renvoi (23) dans la région du dispositif de transport (2) et l'extrémité avant de la tige de piston (26) détectant de façon déplaçable le second des rouleaux de renvoi (24).

25. Dispositif de séparation selon l'une des revendications 20 à 24, **caractérisé en ce que** le dispositif de transfert (20) peut être déplacé jusque dans une position de sortie dans laquelle il s'engage par-dessus l'élément de retenue (5) et déplace le flux de produit (G) jusque dans la région de la bande d'évacuation (17).
